# EUROPEAN PATENT APPLICATION

(11) **EP 4 814 862 A1**
(43) Date of publication of application: **30.09.2026**
(21) Application number: 25165947.0
(22) Date of filing: 25.03.2025
(51) Int. Cl.: G06T 7/00, G06T 7/11, G06T 7/12, G06T 7/13, G06T 7/136, G06T 7/174, G06T 7/194

(54) **METHOD AND SYSTEM FOR DETECTING EDGE DEFECTS ON AT LEAST ONE WORKPIECE**

(71) Applicant: Leica Microsystems CMS GmbH, 35578 Wetzlar (DE); Leica Instruments (Singapore) Pte Ltd., Singapore 618299 (SG)
(72) Inventor: Managoli, Anjali, 35578 Wetzlar (DE); Scheffler, Kay, 35578 Wetzlar (DE); Huang, Chi-Chou, 35578 Wetzlar (DE); Sasaki, Hideki, 35578 Wetzlar (DE)
(74) Representative: Schaumburg und Partner Patentanwälte mbB

(57) **Abstract**

In a first aspect, a method for detecting edge defects (208a, 208b, 400) on at least one workpiece (200) is provided. The method comprises the steps of providing imaging data of at least part of an edge (202, 402) of the at least one workpiece (200), generating an edge intensity image based on the imaging data and generating a colour difference image based on the imaging data. Further, the method comprises the steps of segmenting the edge intensity image and the colour difference image to generate a respective binary edge intensity image or mask and a respective binary colour difference image or mask, and combining the binary edge intensity image and the binary colour difference image and generating a combined binary mask. Further steps of the method are fitting a curve (206) to the at least part of an edge (202, 402) based on the combined binary mask, and detecting edge defects (208a, 208b, 400) on the at least part of an edge (202, 402) of the at least one workpiece (200) based on the curve (206) fitted to the at least part of an edge (202, 402). In a further aspect a system (500) for detecting edge defects (208a, 208b, 400) on at least one workpiece (200) is provided.

## Description

### Technical field

The invention relates to a method for detecting edge defects on at least one workpiece. A corresponding system for detecting edge defects on at least one workpiece is also disclosed.

### Background

When machining or processing workpieces, edge defects can occur due to the machining or the handling of the workpieces. These edge defects can lead to problems during subsequent processing or use of these workpieces, depending on the severity of the edge defects and the specific application of the workpiece. For example, in case of load-bearing parts, edge defects may lead to stress concentrations and pose a risk to the structural integrity of the workpiece or a system the workpiece is integrated into. In case the workpiece is a battery part or an electronic part, edge defects may cause short circuits and pose a fire hazard. In any case, an edge defect may also be aesthetically undesirable.

Thus, there is a general need to reliably detect edge defects. More specifically, it is desirable to be able to carry out this detection efficiently so that it can be routinely used.

### Summary

It is an object to provide a method and a system for detecting edge defects that is reproducible and efficient.

The aforementioned object is achieved by the subject-matter of the independent claims. Advantageous embodiments are defined in the dependent claims and the following description.

In a first aspect, a method for detecting or identifying edge defects, in particular at least one edge defect, on at least one workpiece is provided. The method comprises the step of providing imaging data of at least part of an edge of the at least one workpiece. The method further comprises the steps of generating an edge intensity image based on the imaging data and generating a colour difference image based on the imaging data. Further, the method comprises the step of segmenting the edge intensity image and the colour difference image to generate a respective binary edge intensity image or mask and a respective binary colour difference image or mask. A further step of the method is combining the binary edge intensity image and the binary colour difference image and generating a combined binary mask. Another step of the method is fitting a curve to the at least part of an edge based on the combined binary mask, in particular, the curve is fitted on the combined binary mask. The method further comprises the step of detecting or identifying edge defects on the at least part of an edge of the at least one workpiece based on the curve fitted to the at least part of an edge, in particular based on the combined binary mask.

In particular, the steps are performed in the order they are mentioned in the paragraph above or in the independent method claim. The imaging data may be provided as colour imaging data, such as RGB imaging data, for example. Further, the imaging data may comprise pixel data. The generated edge intensity image and/or the colour difference image may be greyscale images, in particular. The binary edge intensity image or mask may be a binary image, in particular, showing the edge as foreground and the rest of the image as background. Similarly, the binary colour difference image or mask may be a binary image, in particular, showing the workpiece as foreground and the rest of the image as background. The combined binary mask may separate the workpiece with its edge in the foreground from the rest of the image in the background. The detected or identified edge defects may be a protrusion or an indentation of the workpiece relative to the fitted curve, in particular.

The workpiece can be machined or processed with a tool, for example by milling or by cutting with a knife. The machining or processing can be carried out manually or automatically. In particular, this machining or processing can result in the edge defect of the workpiece. The edge defect may have been caused by the machining or processing of the workpiece, in particular of an edge of the workpiece. Alternatively, the edge defect may have been caused by (mis-)handling of the workpiece. Thus, the edge defect may be arranged along an edge of the workpiece, in particular a machined or processed edge. In particular, the edge defects may be of microscopic size. In particular, this means that the edge defects may require an imaging device, such as a microscope, to be visualised. For example, the edge defects may have a size from a few micrometres up to several millimetres. In a particular example, the edge defects may have a size in a range between 1 µm to 10 mm. In a particular embodiment, the size may correspond to a Feret diameter. The workpiece may be made of a variety of materials or their combinations, for example a polymer and/or a metal.

The method enables providing a reproducible and accurate detection or identification of edge defects, in particular for edge defects of various shapes and sizes, as well as variations in imaging conditions. Further, the method enables efficient detection of edge defects. For example, 27 images of size 1600x1200 can be processed by the method in less than one second on a conventional personal computer.

In an embodiment of the method providing imaging data comprises imaging the at least part of an edge of the at least one workpiece. The imaging data may be generated by means of an imaging device, such as a microscope. Thus, the at least part of an edge of the at least one workpiece may be imaged by means of the imaging device. The imaging data may essentially be two-dimensional imaging data that may result from imaging the at least part of an edge in a focus plane of the imaging device. Thus, the edge defect may be detected in the plane the edge was imaged in. Since the at least part of an edge of the workpiece may be imaged and the edge defect may be determined based on the imaging date, the method may alternatively be a method for visually detecting or identifying edge defects on at least one workpiece.

Preferably, the imaging data has a uniform background, for example by imaging the at least part of an edge over on a uniform background and/or with uniform lighting. Whilst the orientation of the workpiece in the image is generally not relevant, when imaging a plurality of edges or workpieces, the edges or workpieces may be similarly arranged or orientated in the image, for example. The step of providing imaging data may comprise automatically or manually setting imaging parameters of the imaging device, such as contrast or lighting. When imaging the at least part of an edge, the entire corresponding edge or workpiece may be imaged. Further, several edges of the workpiece may be imaged and therefore, the imaging data may comprise several edges of the workpiece and the method may be applied to detect edge defects along these several edges.

In particular, the workpiece is arranged such that the imaging data comprises the at least part of an edge of the at least one workpiece trailing between a foreground with the workpiece and a background. The edge may have an essentially linear shape. The method may also be applied to edges of non-linear shapes. In this case, the imaging data may initially be transformed to linearise the edge, for example. This transformation may be carried out prior to fitting the curve, in particular.

In an embodiment of the method, the imaging data of at least part of an edge is provided for a plurality of workpieces, in particular a plurality of different workpieces. Thus, the step may comprise imaging each of the plurality of workpieces. The method enables processing imaging data or edges of a plurality of workpieces.

In an embodiment of the method the step of providing imaging data for the plurality of workpieces is carried out, in particular completed, prior to any other step of the method. Thus, imaging data for each of the plurality of workpieces may be generated initially before any further steps of the method are performed. This enables efficiently detecting edge defects for the plurality of workpieces.

In an embodiment of the method an output is generated based on the detected edge defects of the at least one workpiece. The output may be a printed report, or a report shown on a display, for example to a user. This enables accurately recording results of the method as well as allowing for an efficient decision-making of the user. The output may be for a particular one of the edge defects and/or for a workpiece. The output may additionally or alternatively include or be based on characteristics of the detected edge defects.

In a particular embodiment, the output is generated based on the detected edge defects of the plurality of workpieces. This enables an efficient analysis of the plurality of workpieces. Thus, this may be based on the case when imaging data of a plurality of workpieces is analysed. The output may then be generated after the analysis of all the imaging data of all workpieces is finished. Thus, the output may comprise information on edge defects of all of the plurality of workpieces. In particular, this enables robust automation of the image data analysis steps of the method, for example without manual user intervention.

In an embodiment of the method the edge intensity image is generated based on intensity changes in the imaging data, in particular along vertical and/or horizontal directions. This enables an efficient and accurate generation of the edge intensity image. In particular, the edge intensity image may be determined as sums of squares of respective vertical and horizontal derivates of the imaging data. The derivatives may be a Sobel filter, a Prewitt filter or a Laplace filter. Alternatively, intensity changes may be determined along arbitrary directions to generate the edge intensity image, for example, based on a Gabor filter.

In an embodiment of the method generating the colour difference image comprises converting the imaging data to a uniform colour space, in particular a (essentially) perceptually uniform colour space. This enables accurately generating the colour difference image. A uniform colour space may generally be defined in that a given numerical change corresponds to a similar perceived change in colour. An example of a suitable colour space is the CIELAB or L*a*b colour space. The conversion may be carried out prior to generating the colour difference image.

In an embodiment of the method the colour difference image is generated based on a distance of each pixel colour value, in particular of each pixel of the converted imaging data, to an average background colour value, in particular of the converted imaging data. This enables accurately identifying the foreground, in particular the workpiece, in the imaging data. In particular, this step is carried out after the colour space conversion. In particular, the background is the part of the imaging data that does not include the workpiece.

In an embodiment of the method segmenting the edge intensity image and/or the colour difference image is performed by thresholding, in particular automatic thresholding. This enables clearly separating the foreground, in particular the workpiece, from the background in the imaging data.

In an embodiment of the method the binary edge intensity image and the colour difference image are combined using a logical OR operation, in particular a pixel-wise logical OR operation. This enables efficiently generating the combined binary mask with the segmented workpiece and the segmented edge in the foreground. For example, pixels of the imaging data representing the workpiece and the edge may have been assigned a value of 1 in the binary colour difference image and the binary edge intensity image, respectively. Conversely, the background may have been assigned a value of 0 in the binary colour difference image. In the binary edge intensity image, the background and the workpiece (without the edge) may have been assigned a value 0. Based on the OR operation, in the combined binary mask the pixels representing the edge and the workpiece are assigned a value of 1 and the background is assigned a value of 0. Thus, the workpiece and the edge are clearly separated from the background in the combined binary mask.

In an embodiment of the method the curve fitted to the edge is a spline, in particular a smoothing spline. This enables accurately following the edge in the combined binary mask.

In an embodiment of the method the curve is fitted to boundary pixels of the binary mask. This enables accurately following the edge in the combined binary mask. Thus, the curve may be fitted along the edge between foreground and background of the combined binary mask. For example, the boundary pixels may be (foreground) pixels assigned a value of 1 that are immediately bordering a (background) pixel assigned a value of 0. When fitting the curve to the boundary pixels, a measure of deviation of the curve from the boundary pixels is minimised, for example.

In a particular embodiment, each boundary pixel is weighted based on its distance from the fitted curve, in particular based on its signed distance from the fitted curve. This enables fitting the curve to the linear shape of the edge whilst reducing the influence of deviations from the linear shape of the edge caused by protrusions or indentations of edge defects. Thus, this enables to accurately fit the curve to the ideal shape of the edge, wherein the ideal edge may be a (essentially) linear edge. In particular, the further away a particular boundary pixel is from the fitted curve, the lower its weight. This step may be carried out iteratively. For example, the curve fitting may be done repeatedly, wherein initially all boundary pixels are assigned equal weights, and the weights are updated in subsequent rounds based on their distance to the fitted curve until the fitted curve converges to the (ideal) edge of the workpiece. In particular, this may result in boundary pixels on or of protrusions from the edge of the workpiece being weighted less when fitting the curve.

In particular, edge defects may be detected as pixels or groups of neighbouring pixels assigned a value of 1 and located on a side of the fitted curve opposite from the foreground workpiece (also assigned values of 1). These edge defects may be a protrusion from the edge. Alternatively, edge defects may be detected as pixels or groups of neighbouring pixels assigned a value of 0 and located on a side of the fitted curve opposite from the background (also assigned values of 0). These edge defects may be an indentation in the edge.

In an embodiment of the method the detected edge defects are characterised. This enables taking further decisions based on the detected edge defects. For example, an output may be generated comprising the characteristics of the edge defects or the workpiece comprising edge defects may be flagged to an operator. In particular, the characterisation may include or be based on dimensions of the detected edge defects. For example, the dimensions of each of the detected edge defects may be determined as a Feret diameter.

Generally, the Feret diameter may be determined as the distance between two parallel tangents or planes on opposite sides of a particular edge defect, in particular on opposite sides of a boundary of the edge defect. In particular, the distance is measured along a defined orientation or direction around the edge defect. The distance can be measured along a line perpendicular to the parallel tangents. The Feret diameter may alternatively be called a calliper diameter, referring to the measurement of the object size with a calliper. The enables providing a reproducible and accurate measurement of edge defects, that can be efficiently determined, in particular for edge defects with irregular boundaries or shapes.

In an embodiment of the method the Feret diameter is the maximum Feret diameter. This enables robustly characterising the edge defect, in particular, this enables efficiently characterising the edge defect relative to a predetermined Feret diameter threshold. In particular, the maximum Feret diameter is the longest possible Feret diameter measured in various orientations or angles around the edge defect. Thus, in case the maximum Feret diameter is determined, the characterisation of the edge defect may be based on the maximum Feret diameter.

In an embodiment of the method a plurality of Feret diameters of the edge defect is determined. This enables a precise characterisation of the edge defect. In particular, each of the Feret diameters of the plurality of Feret diameters is determined at a different orientation or angle. This enables robustly determining the maximum Feret diameter. Thus, the determined Feret diameters of the plurality of Feret diameters differ from each other in that they are each determined at a different orientation or angle. In particular, the different orientations refer to different directions in the image plane of the image of the workpiece. Thus, the different directions are not parallel to each other but are all at an angle to each other in the plane of the image.

In an embodiment the method is automated, in particular, at least some of the steps of the method can be carried out automatically without user intervention. This enables efficient and reproducible detection of edge defects.

In an embodiment of the method, the edge defects may be a burr or a delamination. Thus, the method is applicable to a variety of edge defects. In particular, the edge defect is a burr of an edge of the workpiece or a delamination occurring at the edge of the workpiece.

A burr may be an indentation in the workpiece along an edge or a protrusion of material that remains attached to the workpiece after processing. A delamination may occur when processing an edge and layers of the workpiece or coatings on a surface of the workpiece are exposed at the edge and damaged or separated from the surface due to the processing, for example. The edge may be a linear edge or a curved edge, in particular the edge may be a circular edge, such as for a hole in the workpiece.

In an embodiment, the edge defects are characterised as one of: defective or nondefective. This enables efficient characterisation of the edge defects. The characterisation may include further or other categories such as: reworkable, compliant, and/or non-compliant. In the step of characterising the edge defects, the corresponding workpiece may also be characterised. The characterisation of the workpiece may be based on the characterisation of the edge defects. For example, in case a particular workpiece comprises a plurality of edge defects and a certain number of these edge defects is characterised as defective, the particular workpiece may equally be characterised as defective.

In an embodiment of the method, the step of characterising the edge defects comprises comparing the Feret diameters of the edge defects to a threshold value. This enables efficiently characterising the edge defects. For example, the threshold value may be predetermined by a user. Alternatively, the workpiece may have a plurality of edge defects, and the threshold value may be determined based on the Feret diameters of all the edge defects of the workpiece or workpieces, for example an average Feret diameter. In an example, the threshold value may be a particular Feret diameter, above which an edge defect renders or is likely to render the corresponding workpiece defective, in this case, the edge defect is determined to exceed the threshold value, and the edge defect is characterised as defective. Similarly, the workpiece may be characterised as defective.

In another aspect a method for visually analysing a plurality of workpieces is provided. The method comprises the step of providing imaging data of at least part or a section of a plurality of workpieces. When providing imaging data, the imaging data may be generating for the plurality of workpieces, for example by imaging the plurality of workpieces. The method further comprises the steps of analysing the imaging data of the plurality of workpieces and of generating an output, such as a report, based on the analysed imaging data. The steps of the method may be performed in the order they are mentioned above. In particular, the step of providing imaging data is performed and/or completed prior to the step of analysing the imaging data. The method enables efficiently performing analyses, in particular visual analyses, on a large number of workpieces. In particular, the method enables batch analysis of the imaging data of the plurality of workpieces. This contrasts with other methods where individual workpieces are one at a time imaged, analysed and reported on. In this case, the method steps would be individually repeated for each separate workpiece. This can be inefficient due to difficulties to easily automate the sequence of individual steps. Additionally, performing the method steps for individual workpieces one at a time can be an inefficient use of the operating time for devices involved in the method steps. For example, when performing the steps sequentially for individual workpieces at a time, an imaging device may be occupied even when performing an analysis of the imaging data and when generating an output for a single one of the workpieces, before proceeding with imaging, analysing and reporting on the next workpiece. By initially only generating the imaging data for all of the workpieces and upon completion of that step proceeding with analysing the imaging data and generating a respective output, as it is proposed with the method for visually analysing workpieces, the operating time of the imaging device can be more efficiently used.

The step of providing imaging data may comprise imaging the at least part of each of the plurality of workpieces. The imaging data may be generated by means of an imaging device, such as a microscope. Thus, the at least part of the workpieces may be imaged by means of the imaging device. The imaging data may essentially be two-dimensional imaging data that may result from imaging the workpieces in a focus plane of the imaging device. In particular, for imaging the workpieces are arranged such that the imaging data comprises the at least part of each of the workpieces, for example a part of each workpiece that is of interest.

The step of analysing the imaging data of the plurality of workpieces may include analysing the imaging data to detect defects, such as edge defects or surface defects, of each of the plurality of workpieces. This step may be carried out for the imaging data of all of the workpieces of the plurality of workpieces in parallel. For example, the step of analysing the imaging data of the plurality of workpieces may include at least some of the steps of the method for detecting edge defects on at least one workpiece. In particular, these at least some steps may be carried out for each of the workpieces of the plurality of workpieces, for example, to detect edge defects on the plurality of workpieces.

The step of generating an output based on the analysed imaging data may be based on the detected defects of the plurality of workpieces. In particular, this step is carried out after the step of analysing the imaging data is completed. Thus, all of the steps of the method may be carried out in sequence and the method only proceeds to the next step, once the previous step is completed for all the workpieces of the plurality of workpieces, for example.

For example, the output may be a printed report, or a report shown on a display, for example to a user. This enables accurately recording results of the method as well as allowing for an efficient decision-making of the user. The output may be for a particular one of the defects, for a particular workpiece, and/or for the plurality of workpieces. The output may additionally or alternatively include or be based on characteristics of the detected defects.

In a particular embodiment, the output is generated based on the detected defects of the plurality of workpieces. This enables an efficient analysis of the plurality of workpieces. Thus, the output may comprise information on defects of all of the plurality of workpieces. In particular, this enables robust automation of the image data analysis steps of the method, for example without manual user intervention.

The generated output may include characteristics of the workpieces, in particular defects of the workpieces. For example, defects may be characterised based on their size by measurements such as a Feret diameter.

In a further aspect a system for detecting edge defects on at least one workpiece is provided. The system comprises means configured to carry out the method for detecting edge defects on at least one workpiece described in this document.

The system has the same advantages as the method for detecting edge defects on at least one workpiece. Further, the system may be supplemented with the features of the method described in this document, in particular, the features of the dependent claims of the method.

In an embodiment the system comprises an imaging device configured to provide imaging data of at least part of an edge of the at least one workpiece. For example, the imaging device may be a microscope. The system may further comprise a control unit configured to direct elements of the system to carry out the method for detecting edge defects on at least one workpiece. The control unit may comprise an integrated circuit, such as a field programmable gate array, for example. The control unit may further be configured to carry out the steps of the method for detecting edge defects on at least one workpiece.

The system may further have at least a display and/or an output device, such as a printer, which may present information concerning the edge defects to a user.

### Short Description of the Figures

Hereinafter, specific embodiments are described referring to the drawings, wherein:
- Fig. 1: is a flow diagram of a method for detecting edge defects on at least one workpiece,
- Fig. 2: is a flow diagram illustrating selected steps of the method for detecting edge defects on at least one workpiece,
- Fig. 3: is a flow diagram of a method for visually analysing a plurality of workpieces,
- Fig. 4: is a schematic view of an edge defect with Feret diameter measurements in two different orientations, and

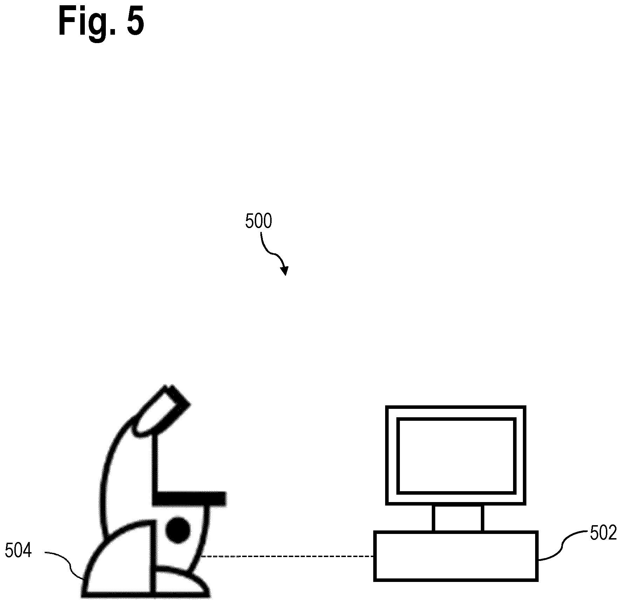

- Fig. 5: is a schematic view of a system for characterising at least one edge defect of a workpiece.

### Detailed Description

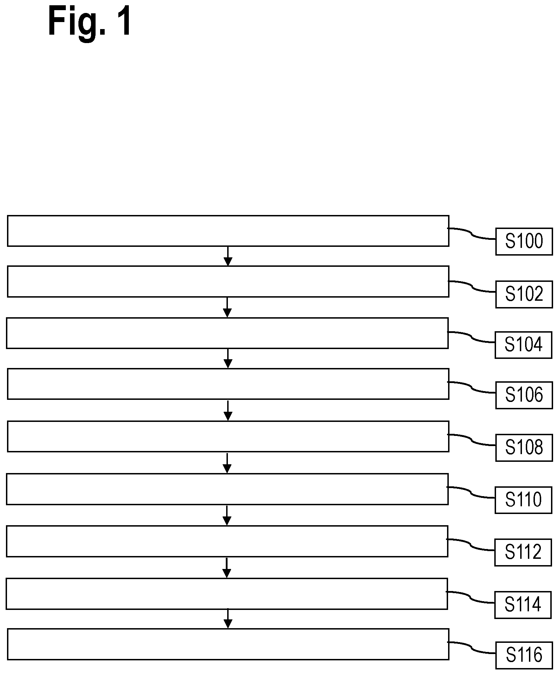

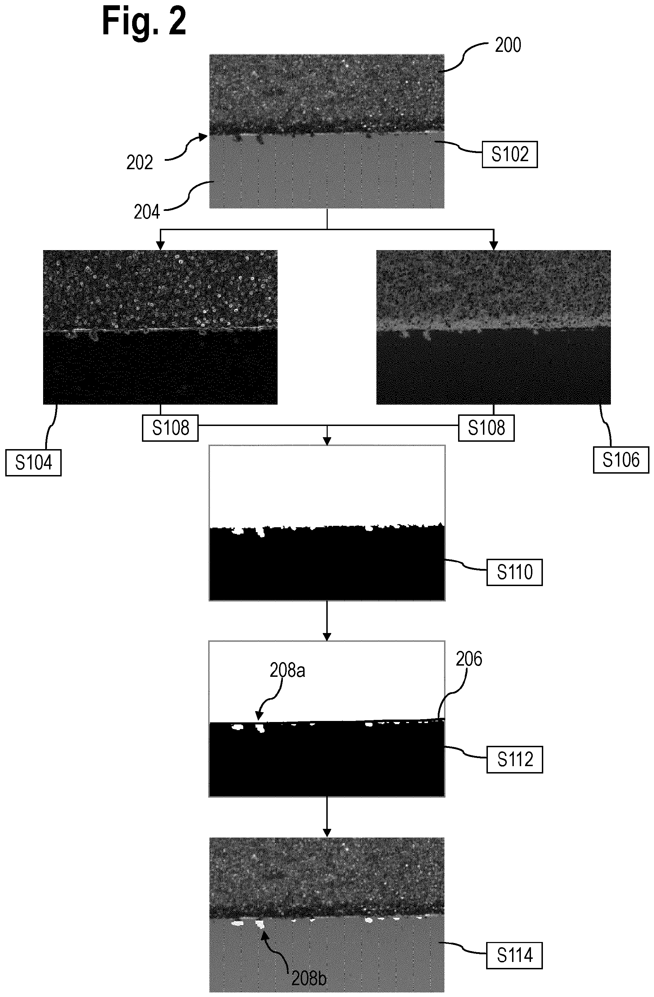

Figure 1 is a flow diagram of a method for detecting edge defects on at least one workpiece. Figure 2 is a flow diagram schematically illustrating selected steps of the method for detecting edge defects on at least one workpiece. The method is discussed in the following with reference to Figs. 1 and 2.

The method starts in step S100. In step S102 imaging data is provided for at least part of an edge of the at least one workpiece. Fig. 2 shows exemplary imaging data for a workpiece 200 with a part of a single edge 202 with reference to S102.

The imaging data may be generated in step S102, for example by means of a microscope. The imaging data may comprise several edges of the at least one workpiece. The imaging data of the at least one workpiece generally comprises pixel data of the at least part of an edge 202 in a foreground and a background 204, the at least part of an edge 202 trailing along the border of the foreground and the background 204, for example.

Furthermore, imaging data for a plurality of workpieces may be provided in step S102. In particular, separate imaging data for each workpiece may be provided. Thus, a set of imaging data corresponding to the plurality of workpieces may be provided in step S102. In case imaging data for a plurality of workpieces is provided, all workpieces of the plurality of workpieces may be imaged in step S102 in order to provide respective imaging data. In particular, the method may only proceed to the next step when all imaging data of the plurality of workpieces is provided. The imaging data may comprise colour information, such RGB data for each pixel.

In step S104 an edge intensity image is generated based on the imaging data of the at least one workpiece. The edge intensity image may be generated by determining intensity changes in the imaging data along particular directions, for example along vertical and/or horizontal directions. The edge intensity image may be generated by determining derivatives along these directions. For example, the derivatives may be determined by a Sobel filter, a Prewitt filter, a Laplace filter, or a Gabor filter.

Prior to determining intensity changes, the imaging data may optionally be converted to greyscale in step S104, in particular in case the imaging data comprises colour information. Thus, the determined edge intensity may be based on the sharpness of changes in brightness between adjacent pixels of the imaging data. Similarly, the resulting edge intensity image may be a greyscale image (shown in Fig. 2, reference sign S104). Pixels of the imaging data located in regions with a sharp intensity transition are represented in the edge intensity image by pixels of high intensity. Conversely, pixels of the imaging data located in regions with a smooth intensity transition are represented in the edge intensity image by pixels of low intensity. In particular, this may highlight the at least part of an edge of the at least one workpiece.

In step S106 a colour difference image is generated based on the imaging data of the at least one workpiece. The colour difference image may be generated by determining the distance of each pixel colour value of the pixels of the imaging data to an average background colour value of the imaging data.

In particular, the background 204 may be the part of the imaging data that does not include the workpiece 200 and/or the edge 202. Preferably, when providing the imaging data, the workpiece 200 is imaged over a uniform background 204, in particular of a known colour. Based on this, the background 204, in particular respective pixels, can be sampled in the imaging data and the average background colour value may be determined.

Prior to determining the distance of each pixel colour value, the imaging data may optionally be converted to a (perceptually) uniform colour space in step S106. A uniform colour space is a colour representation system in which equal numerical differences correspond to equal perceived differences in colour. In an ideal uniform colour space, a given distance between any two colours should reflect the same amount of perceptual difference, regardless of their position within the colour space. An example of a suitable uniform colour space is the CIELAB or L*a*b colour space.

The resulting colour difference image may be a greyscale image (shown in Fig. 2, reference sign S106). Pixels of the imaging data located in the background are represented in the colour difference image by pixels of low intensity. Conversely, pixels of the imaging data located in the foreground, in particular, the workpiece, are represented in the edge intensity image by pixels of various intensities. In particular, this may highlight the workpiece.

The steps S104 and S106 may be carried out sequentially, as it is shown in Fig. 1. Alternatively, the steps S104 and S106 may be carried out in parallel.

In step S108 the edge intensity image and the colour difference image are segmented in order to generate a respective binary edge intensity image and a respective binary colour difference image.

In particular, each of the binary edge intensity image and the binary colour difference image may be generated by comparing intensity values of each pixel of the edge intensity image and the colour difference image to a threshold and assigning the respective pixel of the binary edge intensity image and the binary colour difference image a value of 1 or 0. Separate thresholds may be defined for the edge intensity image and the colour difference image. In particular, the threshold may be chosen automatically based on the pixel intensity distribution of the respective image.

In case the steps S104 and S106 were performed in parallel, the segmentation of step S108 may be performed in parallel for both the edge intensity image and the colour difference image. In case the steps S104 and S106 were performed sequentially or in another sequence, the step S108 can start with segmenting the edge intensity image or the colour difference image once the respective previous step S104 or S106 is finished.

In step S110 the binary edge intensity image and the binary colour difference image are combined in order to generate a combined binary mask (shown in Fig. 2, reference sign S110). The combination may be performed by a logical OR operation, in particular a pixel-wise logical OR operation.

For example, pixels of the imaging data representing the workpiece and the edge may have been assigned a value of 1 in the binary colour difference image and the binary edge intensity image, respectively. Conversely, the background may have been assigned a value of 0 in the binary colour difference image. In the binary edge intensity image, the background and part of the workpiece (without the edge) may have been assigned a value of 0. Based on the OR operation, in the combined binary mask the pixels representing the edge and the workpiece are assigned a value of 1 and the background is assigned a value of 0. Thus, the workpiece and the edge are clearly separated from the background in the combined binary mask.

In step S112 a curve 206 is fitted to the at least part of an edge of the workpiece based on the combined binary mask. The curve 206 may be a spline or a smoothing spline, for example. The curve 206 may be fitted along the edge 202, in particular to boundary pixels of the combined binary mask. In particular, the boundary pixels may be those pixels of the combined binary mask that are at the border between the foreground (white area of display marked with S110, S112 in Fig. 2) and the background (black area of display marked with S110, S112 in Fig. 2). For example, the boundary pixels may be (foreground) pixels assigned a value of 1 that are immediately bordering a (background) pixel assigned a value of 0. When fitting the curve 206, a measure of deviation of the curve from the boundary pixels may be minimised.

In an embodiment of the method, when fitting the curve 206 in step S112, the boundary pixels may be weighted based on their distance from the ideal edge or from the fitted curve 206. In particular, the weighing may be based on each pixel's signed distance from the fitted curve 206, for example, such that a boundary pixel that is at a greater distance from the curve 206 is weighted less than a boundary pixel at a lesser distance from the curve 206. For example, the step S112 may include iteratively fitting the curve 206 to the boundary pixels. For example, initially all boundary pixels may be assigned equal weights. In subsequent iterations the boundary pixels are weighted based on their distance to the fitted curve 206. The iterations may be carried out until the fitted curve 206 converges to the (ideal) edge of the workpiece. In particular, this may result in boundary pixels on or of protrusions from the edge of the workpiece being weighted less when fitting the curve 206.

In step S114, an edge defect 208b is detected on the edge 202 based on the curve 206 fitted to the edge 202. In particular, the edge defect 208b is a protrusion on the edge 202.

In Fig. 2 the original imaging data (of step S102) is overlaid with part of the combined binary mask (of step S112) in order to detect the edge defect 208b in step S114. Alternatively, the respective edge defect 208a may be detected in step S114 based on the combined binary mask of step S112.

The method ends in step S116.

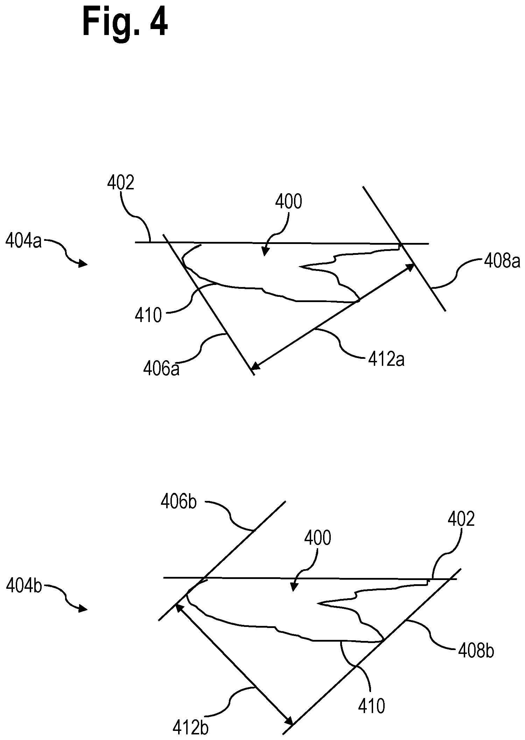

Optionally, an output may be generated after step S114 based on the detected edge defects 208a, 208b of the workpiece 200. For example, a written report may be generated, which includes characteristics of the edge defects 208a, 208b. These characteristics may additionally be determined in step S114. Such characteristics may include measurements of the edge defects 208a, 208b. Exemplary measurements are detailed with reference to Fig. 4 below.

The method steps S102 to S114 may be repeated for each workpiece of a plurality of workpieces. Thus, the method for detecting edge defects, in particular as described with reference to Figs. 1 and 2, may be carried out for each workpiece sequentially.

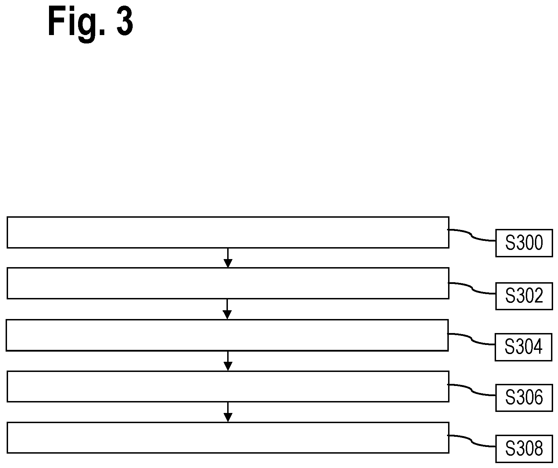

Alternatively, the workpieces of a plurality of workpieces may be simultaneously analysed using the method. In this case, imaging data is provided in step S102 for all of the workpieces of the plurality of workpieces. The remaining steps S104 to S114 are then subsequently carried out for the imaging data of all of the workpieces of the plurality of workpieces in parallel. This enables detecting edge defects of the workpieces of the plurality of workpieces efficiently. This is further discussed with reference to Fig. 3 below.

Figure 3 is a flow diagram of a method for visually analysing a plurality of workpieces. The method starts with step S300. In step S302 imaging data of at least a section of a workpiece is provided for the plurality of workpieces. For example, the imaging data may be generated in step S302 by imaging each of the workpieces of the plurality of workpieces. The imaging data may be generated by means of an imaging device such as a microscope. In particular, only once the imaging data is provided for all workpieces of the plurality of workpieces, the method proceeds to continue with step S304.

In step S304 the imaging data of the plurality of workpieces is analysed. For example, the imaging data of each of the workpieces of the plurality of workpieces is analysed to detect potential defects on each of the workpieces. In a specific example, the method for detecting edge defects on at least one workpiece described with reference to Figs. 1 and 2 may be carried out in step S304 in order to detect defects of each of the workpieces. In particular, the steps S104 to S114 may be carried out to detect edge defects. For example, the steps S104 to S114 may be carried out for each of the workpieces of the plurality of workpieces in parallel.

In step S306 an output may be generated based on the analysis of the workpieces carried out in step S304. The output may be a generated based on the defects detected in step S304, for example. In particular, a written report may be generated, which includes characteristics of the defects. These characteristics may additionally be determined in step S304 for each of the workpieces.

The method ends in step S308.

Figure 4 is a schematic view of an edge defect 400 with Feret diameter measurements in two different orientations 404a, 404b. The edge defect 400 is arranged along an edge 402 of a workpiece. In Fig. 4 at least a part of the edge 402 is shown.

The edge defect 400 may be a protrusion from the edge 402 or an indentation in the edge 402. For example, in case of the edge defect 400 being a protrusion, the workpiece would continue above the edge 402 in the plane of the view according to Fig. 4. In the other case of the edge defect 400 being an indentation, the workpiece would continue below the edge 402 in the plane of the view according to Fig. 4. Alternatively, the edge defect 400 may be a delamination along the edge 402. In any case, a first Feret diameter along a first orientation 404a and a second Feret diameter along a second orientation 404b may be determined for the edge defect 400.

Generally, the first and second Feret diameters are determined by fitting two pairs of parallel tangents 406a, 406b, 408a, 408b to a boundary 410 of the edge defect 400. Thus, the edge defect 400 is essentially arranged between the respective two tangents 406a, 406b, 408a, 408b. The Feret diameter is determined as the distance between the respective tangents 406a, 406b, 408a, 408b. In particular, the distance between the tangents 406a, 406b, 408a, 408b along a respective line 412a, 412b perpendicular to the tangents 406a, 406b, 408a, 408b.

Thus, first Feret diameter is determined by fitting the pair of parallel tangents 406a, 408a to the boundary 410 of the edge defect 400 in the first orientation 404a around the edge defect 400. The line 412a is the distance between the tangents 406a, 408a and therefore the first Feret diameter.

Similarly, the second Feret diameter is determined by fitting the pair of parallel tangents 406b, 408b to the boundary 410 of the edge defect 400 in a second orientation 404b around the edge defect 400. The line 412b is the distance between the tangents 406b, 408b and therefore the second Feret diameter.

The first orientation 404a and the second orientation 404b differ from each other in that the pairs of tangents 406a, 406b, 408a, 408b are at an angle to each other.

The distance between the pairs of tangents 406a, 406b, 408a, 408b determine the Feret diameter for a particular orientation 404a, 404b. The maximum Feret diameter of the edge defect 400 may be determined when two parallel tangents are in such an orientation around the edge defect 400 that the distance between these two parallel tangents is the maximum of all possible orientations around the edge defect 400. In other words, the maximum Feret diameter of the edge defect 400 is determined when two parallel tangents are positioned around the edge defect 400 to give the greatest distance between them.

There may be further edge defects 400 along the edge 402, which are not shown in Fig. 4. The Feret diameter may be determined for each of the further edge defects 400 as outlined above.

The edge defects 208a, 208b detected when carrying out the methods, in particular as described with reference to Figs. 1 to 3 above, may be characterised based on the Feret diameter.

Figure 3 is a schematic view of a system 500 configured to carry out the method for detecting edge defects on at least one workpiece as described in this document. In particular, the system 500 may comprise a control unit or a computer 502 configured to carry out the method. Additionally, the system 500 may comprise an imaging device 504, such as a microscope, configured to image at least part of an edge 202, 402, in particular the edge defect 208a, 208b, 500, of the workpiece 200. The computer 502 may be connected with the imaging device 504 and direct the imaging device 504 to image the at least part of an edge 202, 402 of the workpiece200. The imaging data resulting from the imaging of the edge defect 208a, 208b, 400 may be processed further by the computer 502. For example, the edge defect 208a, 208b, 400, in particular its boundary 410, may be detected in the imaging data by means of the computer 502. Additionally, the generated imaging data may be analysed and/or a Feret diameter may be determined by means of the computer 502, for example, to detect and/or characterise the edge defect 208a, 208b, 400.

Alternatively, the system 500 may be integrated in the microscope 504. In particular, the microscope 504 may be integrated with the control unit configure to carry out the method. This enables a compact system for detecting edge defects of at least one workpiece. The control unit may comprise an integrated circuit, such as a field programmable gate array, configured to carry out the method for detecting edge defects of at least one workpiece, for example.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of Reference Signs

- 200: Workpiece
- 202, 402: Edge of workpiece
- 204: Background
- 206: Curve
- 208a, 208b, 400: Edge defect
- 404a: Orientation of second Feret diameter
- 404b: Orientation of first Feret diameter
- 406a, 108a: Parallel tangents of first Feret diameter
- 406b, 108b: Parallel tangents of second Feret diameter
- 410: Boundary of edge defect
- 412a: Distance between parallel tangents of first Feret diameter
- 412b: Distance between parallel tangents of second Feret diameter
- 500: System for characterising at least one edge defect of a workpiece
- 502: Computer
- 504: Imaging device

## Claims

1. A method for detecting edge defects (208a, 208b, 400) on at least one workpiece (200) comprising the following steps:
providing imaging data of at least part of an edge (202, 402) of the at least one workpiece (200),
generating an edge intensity image based on the imaging data,
generating a colour difference image based on the imaging data,
segmenting the edge intensity image and the colour difference image to generate a respective binary edge intensity image and a respective binary colour difference image,
combining the binary edge intensity image and the binary colour difference image and generating a combined binary mask,
fitting a curve (206) to the at least part of an edge (202, 402) based on the combined binary mask, and
detecting edge defects (208a, 208b, 400) on the at least part of an edge (202, 402) of the at least one workpiece (200) based on the curve (206) fitted to the at least part of an edge (202, 402).

2. The method according to claim 1, wherein providing imaging data comprises imaging the at least part of an edge (202, 402) of the at least one workpiece (200).

3. The method according to one of the preceding claims, wherein imaging data of at least part of an edge (202, 402) is provided for a plurality of workpieces.

4. The method according to claim 3, wherein the step of providing imaging data for the plurality of workpieces is carried out prior to any other step of the method.

5. The method according to one of the preceding claims, wherein an output is generated based on the detected edge defects (208a, 208b, 400) of the at least one workpiece (200).

6. The method according to one of the preceding claims, wherein the edge intensity image is generated based on intensity changes in the imaging data, in particular along vertical and/or horizontal directions.

7. The method according to one of the preceding claims, wherein generating the colour difference image comprises converting the imaging data to a uniform colour space.

8. The method according to one of the preceding claims, wherein the colour difference image is generated based on a distance of each pixel colour value to an average background colour value.

9. The method according to one of the preceding claims, wherein segmenting the edge intensity image and/or the colour difference image is performed by thresholding.

10. The method according to one of the preceding claims, wherein the curve (206) fitted to the edge (202, 402) is a spline.

11. The method according to one of the preceding claims, wherein the curve (206) is fitted to boundary pixels of the binary mask.

12. The method according to claim 11, wherein each boundary pixel is weighted based on its distance from the fitted curve (206).

13. The method according to one of the preceding claims, wherein the detected edge defects (208a, 208b, 400) are characterised.

14. A system (500) for detecting edge defects (208a, 208b, 400) on at least one workpiece (200), the system comprising means (502, 504) configured to carry out the method according to one of the preceding claims.

15. The system according to claim 14, comprising an imaging device (504) configured to provide imaging data of at least part of an edge (202, 402) of the at least one workpiece (200).
